# EUROPÄISCHE PATENTSCHRIFT

(11) **EP 2 492 148 B1**
(45) Veröffentlichungstag und Bekanntmachung des Hinweises auf die Patenterteilung: **01.10.2014**
(21) Anmeldenummer: 12154217.9
(22) Anmeldetag: 07.02.2012
(51) Int. Cl.: B60R 9/045

(54) **Dachlastenträger für ein Fahrzeugdach**
Roof luggage holder for a motor vehicle roof
Galerie de toit pour un toit de véhicule

(30) Priorität: 25.02.2011 DE 102011000935
(43) Veröffentlichungstag der Anmeldung: 29.08.2012
(73) Patentinhaber: JAC Products Europe GmbH, 42285 Wuppertal (DE)
(72) Erfinder: Hauschulz, Heinrich, 44309 Dortmund (DE); Felchner, Michael, 42327 Wuppertal (DE)
(74) Vertreter: Bungartz Christophersen Partnerschaft mbB Patentanwälte

(56) Entgegenhaltungen:
- DE-A1-102005 029 111
- DE-U1- 29 504 783
- US-A1- 2005 017 037
- US-A1- 2006 060 621
- US-A1- 2008 252 100
- US-B1- 6 286 739

## Beschreibung

Die Erfindung betrifft einen Dachlastenträger für ein Fahrzeugdach, mit in Fahrzeuglängsrichtung fest angeordneten ersten und zweiten Längsträgern, einem an seinem ersten Ende über ein Schwenkgelenk mit dem ersten Längsträger verbundenen Querträger, der um das Schwenkgelenk aus einer Ruhestellung, in der sich der Querträger parallel zu dem ersten Längsträger erstreckt, in eine Lastenstellung verschwenkbar ist, in der der Querträger eine Brücke zwischen den beiden Längsträgern bildet.

Viele Fahrzeuge, vor allem Pkw-Kombifahrzeuge, weisen heutzutage eine fest montierte Dachreling auf, an der verschiedene Arten von Gepäckträgern, Fahrradträgern, Skiträgern etc. befestigt werden können. Zur Befestigung dieser Dachlasten dienen ein oder zwei Querträger, deren Enden mit den Längsträgern, das heißt der eigentlichen Dachreling, verbunden werden. Die Verbindung der Querträger mit den Längsträgern ist jedoch häufig aufwändig. Sind die Querträger montiert, führen sie neben unangenehmen Windgeräuschen zu einer Erhöhung des Luftwiderstandes des Fahrzeuges mit der Folge einer Erhöhung des Kraftstoffverbrauchs.

Aus der DE 10 2007 047 755 A1, der EP 1 728 686 B1, der EP 2 052 913 A1 und der gattungsgemäße US-A-2005/0017037 sind bereits Dachlastenträger bekannt, bei denen der Querträger bei Nichtgebrauch in einer Ruhestellung längs eines der beiden Längsträger verbleibt. Sollen Dachlasten transportiert werden, wird der Querträger, der hierzu über ein Schwenkgelenk mit dem einen Längsträger verbunden ist, um 90° aus seiner Ruhestellung in eine Lastenstellung verschwenkt, in der der Querträger eine Brücke zwischen den beiden Längsträgern bildet, und mit beiden Längsträgern reib-oder formschlüssig verbunden ist.

Nachteilig bei dem Dachlastenträger nach der EP 1 728 686 B1 ist, dass zum Versetzen des Querträgers ein Werkzeug benötigt wird, welches der Fahrzeughalter daher stets separat bereithalten muss.

Die Dachlastenträger nach der DE 10 2007 047 755 A1 und der EP 2 052 913 A1 kommen zwar ohne ein derartiges Werkzeug aus, sind jedoch in ihren Anwendungsmöglichkeiten begrenzt, da nur für ein sehr flaches Fahrzeugdach geeignet bzw., da der Querträger in der Ruhestellung in dem einen Längsträger integriert untergebracht ist und diesen schwächt, für größere Nutzlasten nicht geeignet.

Der Erfindung liegt die Aufgabe zugrunde, einen stark belastbaren Dachlastenträger zu schaffen, bei dem die Verriegelung des Querträgers werkzeuglos erfolgt, wobei eine für den Transport auch schwerer Dachlasten wichtige Befestigung sowohl in Fahrzeuglängsrichtung als auch zumindest in Fahrzeugquerrichtung erreicht werden soll.

Zur Lösung dieser Aufgabe wird ein Dachlastenträger mit den Merkmalen des Patentanspruchs 1 vorgeschlagen.

Erfindungsgemäß sind zwei erste Formschlusselemente, die vorzugsweise identisch gestaltet, jedoch zueinander um 90° verdreht angeordnet sind, an einem Längsabschnitt des ersten Längsträgers selbst sowie, in Fahrzeuglängsrichtung auf gleicher Höhe wie das Schwenkgelenk, an dem anderen, zweiten Längsträger montiert. Ein zweites Formschlusselement ist an dem Querträger im Bereich dessen zweiten Endes angeordnet. Dieses zweite Formschlusselement ist in dem Querträger um eine parallel zu der Achse des Schwenkgelenks angeordnete Achse drehbar und in Richtung dieser Achse längsbeweglich. Ferner ist das zweite Formschlusselement so ausgebildet, dass es für den Formschluss mit einem beliebigen der beiden ersten Formschlusselemente von unten her in dieses eingreift. Daher ist der Querträger mit seinem zweiten, verschwenkbaren Ende sowohl an dem ersten Längsträger, mit dem er in dem Schwenkgelenk verbunden ist, als auch an dem zweiten, auf der anderen Fahrzeugseite angeordneten Längsträger durch Drehen verriegelbar. Diese Verriegelung nach Art eines Bajonetts ist auch für größere Gepäcklasten sicher und widerstandsfähig, da das querträgerseitige Formschlusselement von unten her in das längsträgerseitige Formschlusselement hineingelangt und darin eingreift, sodass ein Lösen selbst bei erhöhten Belastungen ausgeschlossen ist. Erst durch Verdrehen des zweiten Formschlusselements wird der nach Art eines Bajonetts arbeitende Formschluss wieder gelöst.

In Bezug auf die identische Gestaltung der längsträgerseitigen, ersten Formschlusselemente wird mit einer Ausgestaltung der Erfindung vorgeschlagen, dass diese beiden Formschlusselemente an identisch gestalteten Bauteilen ausgebildet sind, und dass die Bauteile zueinander um 90° oder 270° verdreht an dem jeweiligen Längsträger befestigt sind. Zur baulichen Identität und damit Austauschbarkeit der beiden Bauteile trägt ferner bei, wenn diese zu ihrer drehfesten Verbindung mit dem jeweiligen Längsträger mit Befestigungsbereichen versehen sind, die sich alle auf einer Diagonalen zur Längsachse des Längsträgers befinden.

Gemäß einer weiteren Ausgestaltung sind die beiden Längsträger Hohlprofile, gegen deren mit einer Öffnung versehene obere Wand das jeweilige Bauteil von innen her befestigt ist, wobei das Bauteil mit einem daran ausgebildeten Zentrierbund in die Öffnung eingreift.

Um den Querträger nicht nur durch Formschluss zu verriegeln, sondern zusätzlich durch Reibschluss spielfrei an dem Längsträger zu positionieren, wird mit einer weiteren Ausgestaltung vorgeschlagen, dass auf der Achse eine Spannvorrichtung zur Druckbeaufschlagung eines gegenüber dem zweiten Formschlusselement höhenbeweglichen Reibelements angeordnet ist, wobei die nach unten wirkende Reibfläche dieses Reibelements gegen eine starr an dem ersten, d. h. längsträgerseitigen Formschlusselement ausgebildete Gegenreibfläche anliegt. Mit Betätigung der im Querträger eingebauten Spannvorrichtung kommt es daher zu einem mittelbaren oder unmittelbaren Gegeneinanderziehen von Querträger und Längsträger, so dass, ungeachtet des bereits bestehenden Formschlusses, eine auch unter Belastung spielfreie Verbindung erreicht wird.

Hinsichtlich einer möglichen Ausgestaltung der Spannvorrichtung wird ein Handhebel vorgeschlagen, an dem einstückig ein in Richtung zu dem Reibelement hin arbeitender Exzenter ausgebildet ist. Vorzugsweise ist dieser Handhebel über einen Gelenkbolzen mit dem zweiten, also dem querträgerseitigen Formschlusselement schwenkbeweglich verbunden.

Gemäß einer weiteren Ausgestaltung ist der Querträger als ein Profil ausgebildet, in dem der Handhebel angeordnet ist. Für eine versenkte Anordnung des Handhebels, und um das Ergreifen und Schwenken des Handhebels zu ermöglichen, ist die Oberseite des Profils mit einer entsprechend dimensionierten, sich in Profillängsrichtung ersteckenden Öffnung versehen.

Im Hinblick auf ein günstiges Verhältnis zwischen der von Hand aufgebrachten Spannkraft und dem dadurch erzeugten Reibwiderstand ist es von Vorteil, wenn die Reibfläche an dem Reibelement und die Gegenreibfläche an dem ersten Formschlusselement jeweils konisch gestaltet sind. Der Durchmesser und damit die Baugröße des Konus lässt sich gering halten, wenn die Gegenreibfläche mit mindestens einer sich in Richtung der Achse erstreckenden Unterbrechung für den axialen Hindurchtritt des zweiten Formschlusselements versehen ist. Gemäß einer weiteren Ausgestaltung wird für einen Toleranzausgleich in Querträgerlängsrichtung vorgeschlagen, dass das Reibelement und das zweite Formschlusselement längsbeweglich in dem Querträger angeordnet sind. Damit wird dem Umstand Rechnung getragen, dass bei einem Fahrzeug die beiden Längsträger nicht immer exakt parallel verlaufen.

Schließlich wird in Bezug auf das querträgerseitige Formschlusselement vorgeschlagen, dass sich dieses aus einem auf der Achse angeordneten Verbindungsschaft, der ein- oder mehrteilig aufgebaut sein kann, und einem an dessen unterem Ende befestigen, zu dem längsträgerseitigen Formschlusselement korrespondierenden Querbolzen zusammensetzt.

Weitere Einzelheiten und Vorteile werden nachfolgend anhand der beigefügten Zeichnungen näher erläutert. Auf der Zeichnung zeigen:
- Figur 1: in perspektivischer Darstellung einen auf einem Pkw-Fahrzeugdach angeordneten Dachlastenträger, dessen schwenkbarer Querträger hier in seiner Lastenstellung, d. h. in seiner Gebrauchsstellung, verriegelt ist;
- Figur 2a: den Querträger in seiner Ruhestellung, d. h. verriegelt an dem einen Längsträger;
- Figur 2b: die Gegenstände nach Fig. 2a nach dem Lösen eines Handhebels;
- Figur 3a: den Querträger in seiner Lastenstellung, jedoch noch unverriegelt an dem darunter angeordneten Längsträger;
- Figur 3b: die Gegenstände nach Figur 3a nach der formschlüssigen Verriegelung;
- Figur 3c: die Gegenstände nach den Figuren 3a und 3b nach der reibschlüssigen Verklemmung;
- Figur 4a: einen Schnitt durch den quer zueinander angeordneten Längs- und den Querträger im Verbindungsbereich und bei abgesenktem Handhebel;
- Figur 4b: einen Schnitt in einer gegenüber Fig. 4a um 90° gedrehten Schnittebene und bei aufgestelltem Handhebel;
- Figur 5: in einer Explosionsdarstellung die Einzelteile des Verbindungsbereichs und
- Figur 6: in einer Explosionsdarstellung die Einzelteile im Bereich des anderen Endes des Querträgers, in dem dieser über ein Schwenkgelenk mit dem darunter angeordneten Längsträger verbunden ist.

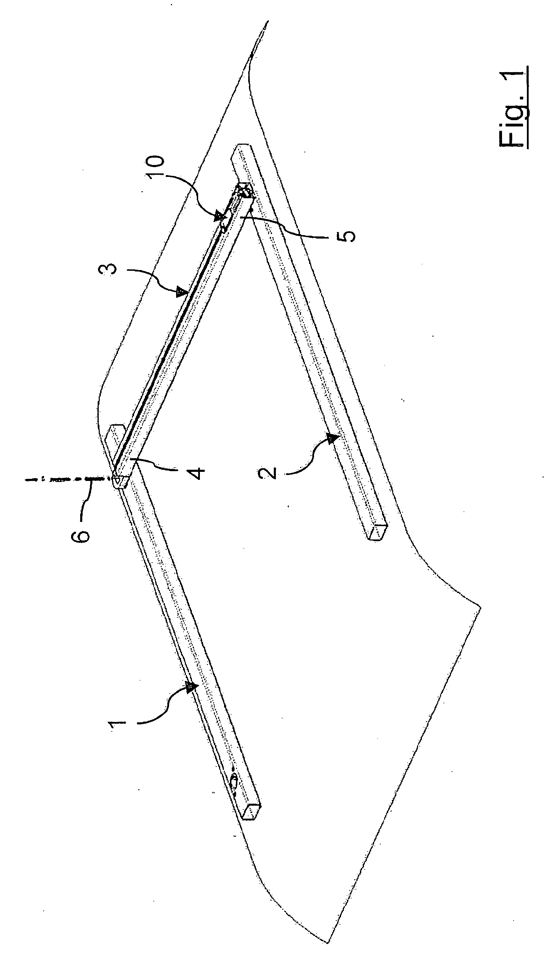

Figur 1 zeigt das Fahrzeugdach eines Pkw, Kombifahrzeuges oder SUV mit einem darauf montierten Dachträgersystem, bestehend aus in Fahrzeuglängsrichtung längs der Dachränder angeordneten Längsträgern 1, 2 und einem Querträger 3. Weitere Querträger 3 gleicher Bauart können vorhanden sein, sind jedoch auf der Zeichnung nicht dargestellt.

Alle Träger 1, 2, 3 bestehen aus Metallprofilen, wobei die Längsträger 1, 2 geschlossene, einfache Hohlprofile sind, hingegen der Querträger 3 zusätzlich an seiner Oberseite ein nach oben offenes C-Profil aufweist, in dessen Nut 7 sich weitere Trägerelemente befestigen lassen. Die Längsträger 1, 2 können mit dem Fahrzeugdach verschraubt sein, sie können jedoch auch Bestandteil des Fahrzeugdaches selbst sein, z. B. als Dachprofil.

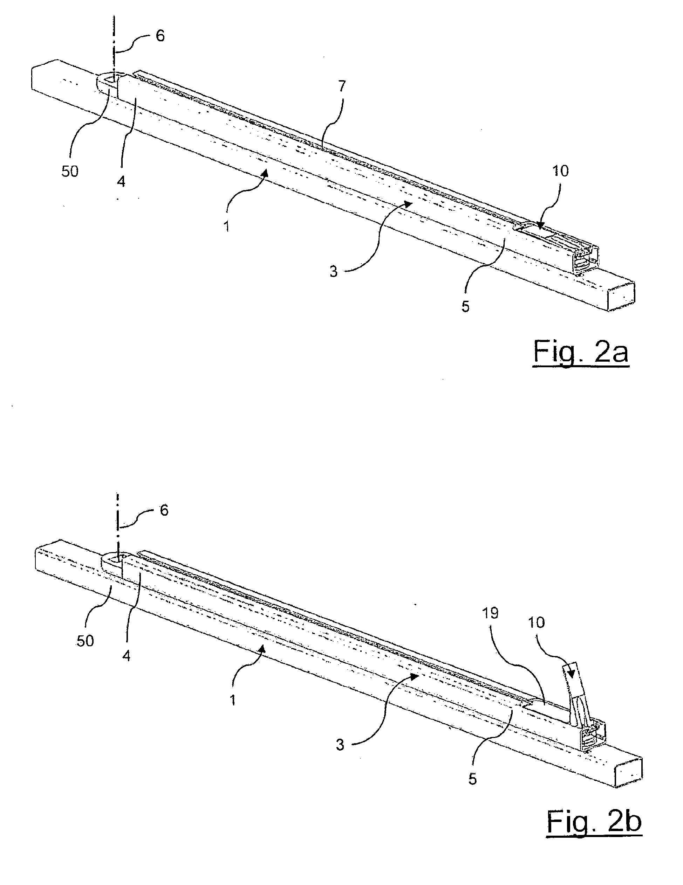

Die Figur 1 zeigt den Querträger 3 in seiner Lastenstellung, in welcher er nach Art einer Brücke den ersten Längsträger 1 mit dem zweiten Längsträger 2 verbindet. Wird hingegen der Dachlastenträger nicht benötigt, befindet sich, wie in Figur 2a dargestellt, der Querträger 3 in einer Ruhestellung auf und parallel zu dem ersten Längsträger 1. Zum Wechsel des Querträgers 3 zwischen dieser Ruhestellung und seiner in Figur 1 wiedergegebenen Lastenstellung sind die beiden Enden des Querträgers unterschiedlich gestaltet.

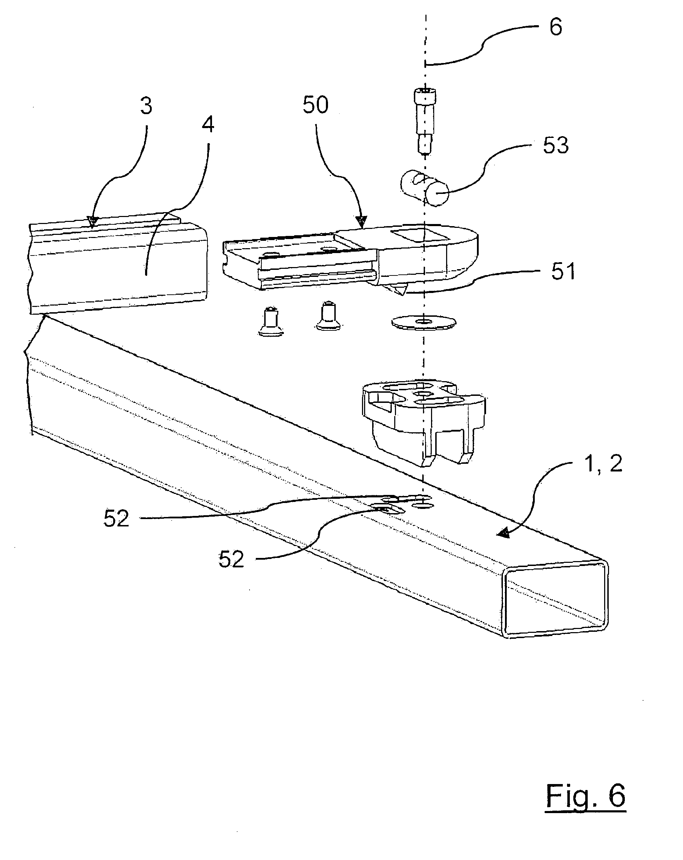

An seinem ersten Ende 4 ist der Querträger 3 über ein Schwenkgelenk 6 dauerhaft mit dem ersten Längsträger 1 verbunden. Die Gestaltung der Einzelteile im Bereich des Schwenkgelenks 6 des Querträgers 3 ist im Detail in Figur 6 wiedergegeben.

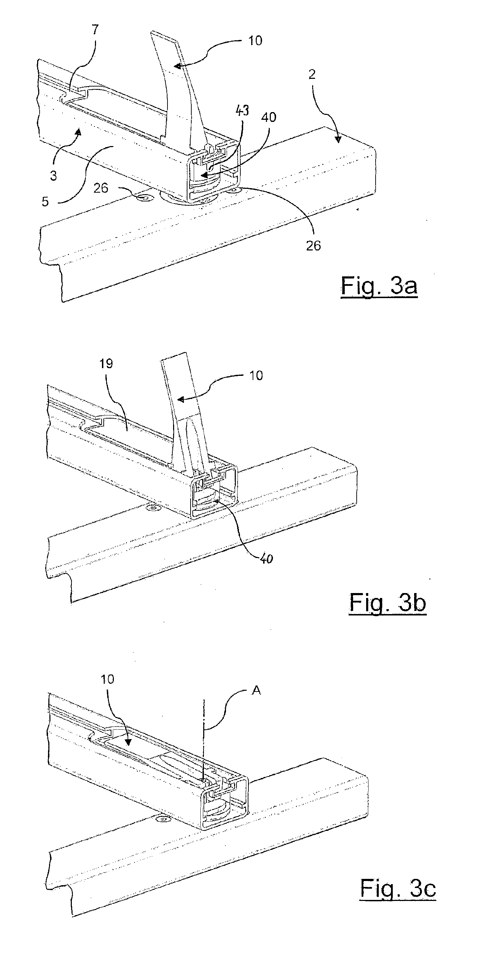

Im Bereich des zweiten, beim Wechsel zwischen Ruhe- und Lastenstellung verschwenkenden Endes 5 des Querträgers 3 sind technische Maßnahmen realisiert, um dieses Ende 5 wahlweise in Ruhestellung an dem ersten Längsträger 1 (Figur 2a), oder in Lastenstellung an dem zweiten Längsträger 2 (Figur 1, Figur 3c) spielfrei zu verriegeln.

Die Figuren 2a und 2b zeigen für die Ruhestellung, und die Figuren 3a bis 3c für die Lastenstellung dieses zweite Ende 5 des Querträgers 3. An diesem Ende 5 ist in dem Profil des Querträgers 3 ein Handhebel 10 einer Spannvorrichtung angeordnet, der gemäß den Figuren 3a, 3b und 3c drei Positionen einnehmen kann. In der Spannstellung nach Figur 3c ist der Handhebel 10 durch Abklappen geschlossen, wobei er sich versenkt vollständig innerhalb der Kontur des Querträgerprofils befindet. Der Querträger ist hier an dem Längsträger 1, 2 sowohl formschlüssig durch Drehen verriegelt, als auch geklemmt. In der Position nach Figur 3b ist der Handhebel 10 ausgeklappt, der Querträger ist zwar noch formschlüssig drehverriegelt, aber nicht mehr verklemmt. In der Position nach Figur 3a ist der Querträger 3 nicht nur ausgeklappt, sondern zusätzlich gegenüber der Position nach Figur 3b um 90° verdreht. Er ist nunmehr auch nicht mehr verriegelt, und ließe sich ohne Weiteres nach oben von dem Längsträger anheben.

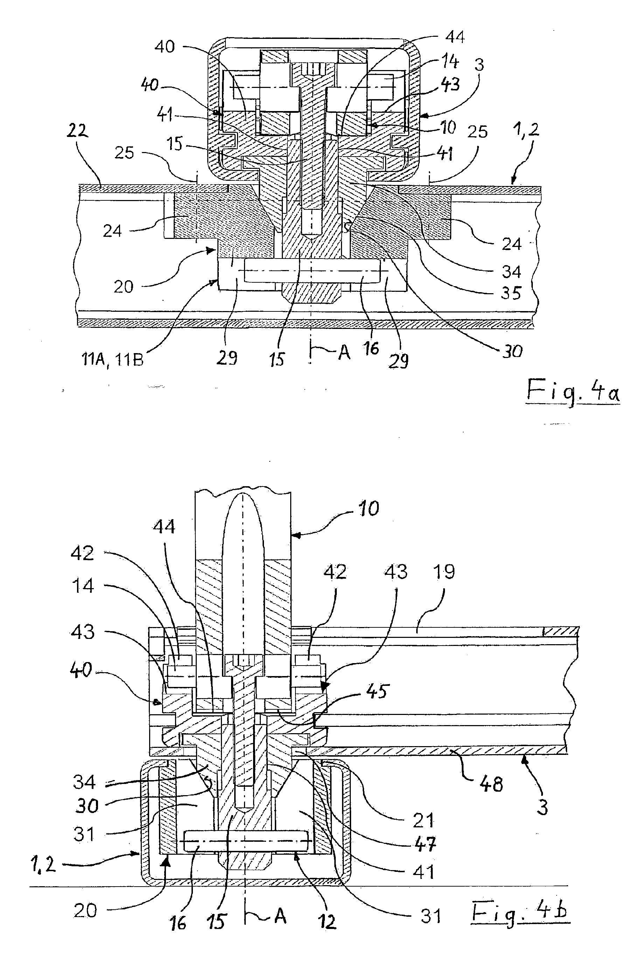

Zur Erzielung dieser drei Zustände ist, wie die Fign. 4a und 4b im Detail zeigen, der Handhebel 10 über einen Gelenkbolzen 14 mit einem vertikalen Schaft 15 verbunden, der bis in den Längsträger 1, 2 hinabreicht, und dort an seinem unteren Ende mit einem Querbolzen 16 versehen ist. Gelenkbolzen 14, Schaft 15 und Querbolzen 16 bilden eine starre Einheit und sind als solche sowohl um die vertikale Achse A drehbar, als auch in Längsrichtung dieser Achse A beweglich. Sie bilden, vor allem der Querbolzen 16, das querträgerseitige Formschlusselement 12, welches, je nach Drehlage und Höhenlage, entweder in angehobener Position in ein korrespondierendes, fest in dem Längsträger 1, 2 angeordnetes Formschlusselement 11A, 11B eingreift und damit gegen Verdrehen verriegelt ist, oder sich, in abgesenkter Position, in einer Höhenposition unterhalb des Formschlusselements 11A, 11B befindet und dann frei um die Achse A drehbar ist.

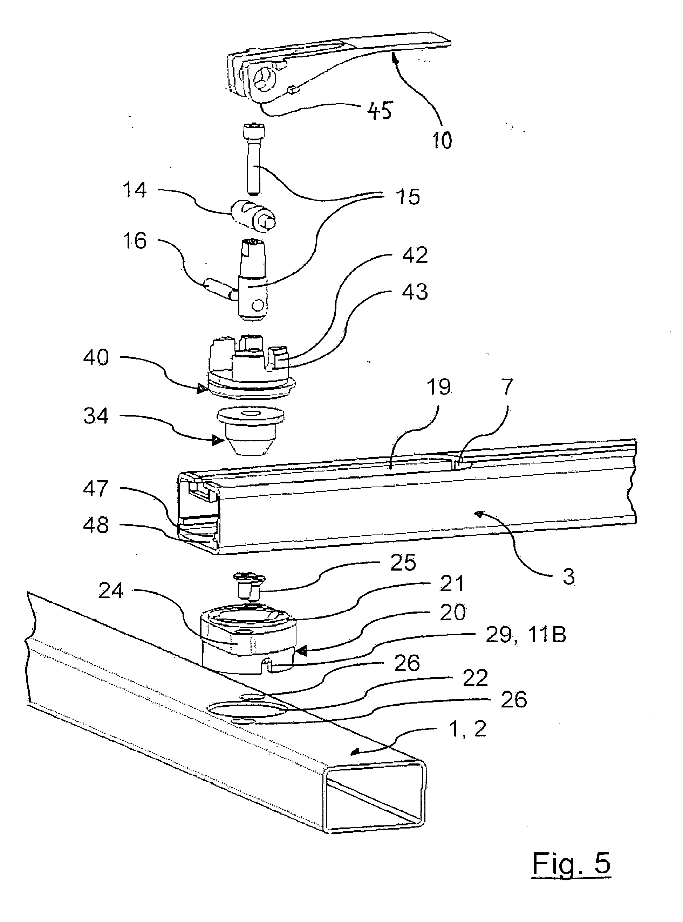

Bei dem starr in dem Längsträger 1 angeordneten Formschlusselement 11A und dem starr in dem anderen Längsträger 2 angeordneten Formschlusselement 11B handelt es sich um ein vorzugsweise aus Kunststoff bestehendes Bauteil 20. Dieses ist zur Verankerung in dem Profil des Längsträgers 1, 2 mit einem nach oben ragenden Zentrierbund 21, der in eine entsprechende Öffnung in der Oberseite 22 des Profils 1, 2 eingreift, sowie mit zwei Befestigungsbereichen 24 versehen, die jeweils eine Verschraubung 25 aufnehmen. Die Verschraubungen 25 befinden sich auf einer Diagonalen, bezogen auf die Längserstreckung des Längsträgerprofils. Auf diese Weise lässt sich dasselbe Bauteil 20 auch um 90° oder 270° um die Achse A verdreht von innen her in dem relativ schmalen Längsträgerprofil montieren. Es sind daher identisch gestaltete Bauteile 20 in dem ersten Längsträger 1, wie auch, um 90° oder 270° gedreht, in dem zweiten Längsträger 2 angeordnet. Anzupassen ist insoweit nur das Verschraubungs-Lochbild 26 (Fig. 5) im jeweiligen Längsträger 1 bzw. 2.

Für den Formschluss mit dem Querbolzen 16 ist das Bauteil 20 mit nur nach unten hin offenen Ausnehmungen 29 versehen, in die der Querbolzen 16 bei dessen Anheben hineingelangt. Die Ausnehmungen 29 sind entsprechend der Bolzenform als nach unten hin offene Mulden gestaltet, in die der Bolzen 16 beim Anheben einfahren kann.

Um den hier zweiteilig gestalteten Verbindungsschaft 15 herum ist das Bauteil 20 mit einer nach unten konisch zulaufenden Fläche versehen, die eine Gegenreibfläche 30 bildet. Die Fläche 30 ist allerdings nicht geschlossen konisch, sondern sie ist mit zwei sich in Richtung der Achse A erstreckenden Unterbrechungen 31 versehen. Gemeinsam bilden diese Unterbrechungen 31 einen vertikalen Kanal, durch den sich der Querbolzen 16 durch das gesamte Bauteil 20 hindurch nach oben wegziehen lässt. Dies ist jedoch nur in der entriegelten Drehlage des Querbolzens 16 gemäß Fig. 4b möglich, da der Bolzen nur in dieser Drehlage zu den beiden Unterbrechungen 31 fluchtet. Ist der Querbolzen 16 hingegen gemäß Fig. 4a um 90° verdreht, kann er nicht nach oben hin durch das Bauteil 20 hindurchtreten, sondern er stützt sich von unten in den beiden Ausnehmungen 29 ab und ist so drehfest verriegelt.

Im Fall der Klemmung, d. h. bei abgeklapptem Handhebel 10, kommt es zu einer Verspannung eines nach unten konisch zulaufenden Reibelements 34 gegen die an dem Bauteil 20 ausgebildete Gegenreibfläche 30. Das konische Reibelement 34 ist mit einer zentralen Durchführung 41 versehen, durch die der Schaft 15 des zweiten Formschlusselements 12 frei beweglich hindurchführt.

Von oben stützt sich auf dem konischen Reibelement 34 ein Drehlager 40 ab, welches vorzugsweise als Formteil aus Kunststoff gestaltet ist. Das Drehlager 40 befindet sich innerhalb des Profils des Querträgers 3. Es ist mit einer zentralen Durchführung für den Schaft 15, mit seitlich in Schenkeln 42 angeordneten Stützlagern 43 für den Gelenkbolzen 14, und mit einer Exzentergegenfläche 44 versehen. An der nach oben weisenden Exzentergegenfläche 44 stützt sich von oben her der einstückig an dem Handhebel 10 ausgebildete Exzenter 45 ab, dessen zu dem Gelenkbolzen 14 exzentrisch ausgebildeten Konturverlauf Fig. 5 erkennen lässt.

Bei der Klemmung stützt sich das Drehlager 40 von oben her gegen den Boden des Querträgers 3 ab. Zusätzlich stützt sich das Drehlager 40 von oben her gegen das Reibelement 34 ab. Das Drehlager 40 und das Reibelement 34 sind zueinander drehbeweglich. Das Drehlager 40 kann nach unten nicht aus dem Querträger 3 herausfallen, was durch entsprechende Dimensionierung einer Öffnung 47 im Boden 48 des Querträgers 3 erreicht wird.

Die Öffnung 47 im Boden des Querträgers, durch die hindurch sich das Reibelement 34 erstreckt, ist in Profillängsrichtung langlochförmig, um einen gewissen Längsausgleich für den Fall zu bieten, dass die beiden Längsträger 1, 2 des Dachlastenträgers nicht genau parallel zueinander verlaufen.

Die Kontur des an der Exzentergegenfläche 44 entlang gleitenden Exzenters 45 ist so gestaltet, dass mit dem Niederdrücken des Handhebels 10 der durch den Handhebel hindurchführende Gelenkbolzen 14 vertikal angehoben wird, wobei er von den beiden Stützlagern 43 abhebt. Zu diesem Zweck sind die muldenförmig gestalteten Stützlager 43 mit nach oben verlängernden Parallelabschnitten versehen, die auch beim Anheben des Gelenkbolzens 14 dessen Führung in dem Drehlager 40 sicherstellen. Mit dem Gelenkbolzen 14 werden auch der Verbindungsschaft 15 und der unten angebrachte Querbolzen 16 angehoben, wodurch, bei entsprechender Drehlage der Anordnung, der Querbolzen 16 nach oben in die beiden muldenförmigen Ausnehmungen 29 einfährt und nach Art eines Drehbajonetts drehfest verriegelt. Dieser Zustand ist erreicht, nachdem der Handhebel 10 zwar größtenteils, aber noch nicht vollständig in den Querträger hinein abgeklappt ist. Die restliche Schwenkbewegung unter weiterem Spannen des Exzenters führt zu einer klemmenden Verspannung der ganzen Spannvorrichtung, indem es durch den Druck von oben her auf das Reibelement 34 zu einem erhöhten Reibschluss bzw. Verklemmen zwischen der Reibfläche 35 des Reibelements 34 und der Gegenreibfläche 30 kommt. Erst dieses Verklemmen mittels der Spannvorrichtung führt zu einer vollständigen Spielfreiheit zwischen Querträger 3 und dem darunter angeordneten Längsträger 1 oder 2. Hierfür spielt es keine Rolle, ob die so erzielte Verbindung jene nach Fig. 2a ist, also die Verbindung des Querträgers 3 mit dem parallel darunter angeordneten ersten Längsträger 1, oder die Verbindung nach Figur 3c, also jene des Querträgers 3 mit dem gegenüberliegenden, anderen Längsträger 2. Denn in beiden Fällen sorgt die Kombination einer Drehverriegelung mit einer Verklemmung dafür, dass auch im Falle größerer, auf dem Querträger ruhender Lasten ein Spiel der beteiligten Bauteile im Verbindungsbereich ausgeschlossen ist.

In Figur 6 ist die Gestaltung des Querträgers 3 und des Längsträgers 1 im Bereich des Schwenkgelenks 6 in einer Explosionsdarstellung wiedergegeben. In das entsprechende Ende 4 des Querträgerprofils 3 ist ein Endstück 50 aus Kunststoff eingesetzt, welches an seiner Unterseite mit einem vorzugsweise einstückig angeformten Vorsprung 51 versehen ist. Dieser Vorsprung 51 fügt sich formschlüssig in eine entsprechende Ausnehmung 52 ein, mit der der Längsträger 1 auf seiner Oberseite versehen ist. Durch diesen zusätzlichen Formschluss ist der eigentliche Gelenkbolzen 53 des Schwenkgelenks 6 von Kräften in Fahrzeuglängsrichtung und in Fahrzeugquerrichtung weitgehend entlastet.

Im Hinblick auf eine möglichst große Zahl von Gleichteilen ist der jeweilige Längsträger 1, 2 mit zwei Ausnehmungen 52 versehen, von denen die Eine den Formschluss bei Längsanordnung des Querträgers, und die Andere den Formschluss bei Queranordnung des Querträgers bietet. Der linke Längsträger 1 und der rechte Längsträger 2 können daher auch hinsichtlich dieser Ausnehmungen 52 gleich gestaltet sein.

### Bezugszeichenliste

- 1: erster Längsträger
- 2: zweiter Längsträger
- 3: Querträger
- 4: erstes Ende des Querträgers
- 5: zweites Ende des Querträgers
- 6: Schwenkgelenk
- 7: Nut
- 10: Handhebel
- 11A: Formschlusselement
- 11B: Formschlusselement
- 12: Formschlusselement
- 14: Gelenkbolzen
- 15: Verbindungsschaft
- 16: Querbolzen
- 19: Öffnung
- 20: Bauteil
- 21: Zentrierbund
- 22: Oberseite
- 24: Befestigungsbereich
- 25: Verschraubung
- 26: Verschraubungs-Lochbild
- 29: Ausnehmung
- 30: Gegenreibfläche
- 31: Unterbrechung
- 34: Reibelement
- 35: Reibfläche
- 40: Drehlager
- 41: Durchführung
- 42: Schenkel
- 43: Stützlager
- 44: Exzentergegenfläche
- 45: Exzenter
- 47: Öffnung
- 48: Boden
- 50: Endstück
- 51: Vorsprung
- 52: Ausnehmung
- 53: Gelenkbolzen

- A: Drehachse

## Patentansprüche

1. Dachlastenträger für ein Fahrzeugdach, mit in Fahrzeuglängsrichtung fest angeordneten ersten und zweiten Längsträgern (1, 2), einem an seinem ersten Ende (4) über ein Schwenkgelenk (6) mit dem ersten Längsträger (1) verbundenen Querträger (3), der um das Schwenkgelenk (6) aus einer Ruhestellung, in der sich der Querträger (3) parallel zu dem ersten Längsträger (1) erstreckt, in eine Lastenstellung verschwenkbar ist, in der der Querträger (3) eine Brücke zwischen den beiden Längsträgern (1, 2) bildet, wobei an einem anderen Längsabschnitt des ersten Längsträgers (1) sowie, in Fahrzeuglängsrichtung auf gleicher Höhe wie das Schwenkgelenk (6), an dem zweiten Längsträger (2) jeweils ein erstes Formschlusselement (11A, 11B) starr angeordnet ist, und dass an dem Querträger (3) im Bereich dessen zweiten Endes (5) ein zweites Formschlusselement (12) angeordnet ist, welches in dem Querträger (3) um eine parallel zu der Achse des Schwenkgelenks (6) angeordnete Achse (A) drehbar ist, **dadurch gekennzeichnet, dass** das zweite Formschlusselement (12) in Bezug auf den Querträger (3) in Richtung der Achse (A) längsbeweglich angeordnet ist, und für den Formschluss mit einem beliebigen der beiden ersten Formschlusselemente (11A, 11 B) von unten her in dieses eingreift.

2. Dachlastenträger nach Anspruch 1, **dadurch gekennzeichnet, dass** die beiden ersten Formschlusselemente (11A, 11B) identisch gestaltet, jedoch in zueinander um 90° verdrehter Ausrichtung angeordnet sind.

3. Dachlastenträger nach Anspruch 2, **dadurch gekennzeichnet, dass** die beiden ersten Formschlusselemente (11A, 11B) an identisch gestalteten Bauteilen (20) ausgebildet sind, und dass die Bauteile (20) zueinander um 90° oder 270° verdreht an dem jeweiligen Längsträger (1, 2) befestigt sind.

4. Dachlastenträger nach Anspruch 3, **dadurch gekennzeichnet, dass** die beiden Bauteile (20) zu ihrer drehfesten Verbindung mit dem jeweiligen Längsträger (1, 2) mit Befestigungsbereichen (24) versehen sind, die sich alle auf einer Diagonalen zur Längsachse des Längsträgers (1, 2) befinden.

5. Dachlastenträger nach Anspruch 3 oder 4, **dadurch gekennzeichnet, dass** die Längsträger (1, 2) Hohlprofile sind, gegen deren mit einer Öffnung (22) versehene obere Wand das jeweilige Bauteil (20) von innen her befestigt ist, wobei das Bauteil (20) mit einem daran ausgebildeten Zentrierbund (21) in die Öffnung (22) eingreift.

6. Dachlastenträger nach einem der vorangehenden Ansprüche, **dadurch gekennzeichnet, dass** auf der Achse (A) eine Spannvorrichtung zur Druckbeaufschlagung eines gegenüber dem zweiten Formschlusselement (12) höhenbeweglichen Reibelements (34) angeordnet ist, dessen nach unten wirkende Reibfläche (35) gegen eine starr an dem ersten Formschlusselement (11A, 11 B) ausgebildete Gegenreibfläche. (30) anliegt.

7. Dachlastenträger nach Anspruch 6, **dadurch gekennzeichnet, dass** Bestandteil der Spannvorrichtung ein Handhebel (10) mit einem einstückig daran ausgebildeten, in Richtung zu dem Reibelement (34) hin arbeitenden Exzenter (45) ist.

8. Dachlastenträger nach Anspruch 7, **dadurch gekennzeichnet, dass** der Handhebel (10) über einen Gelenkbolzen (14) schwenkbeweglich mit dem zweiten Formschlusselement (12) verbunden ist.

9. Dachlastenträger nach Anspruch 7 oder 8, **dadurch gekennzeichnet, dass** der Querträger (3) ein Profil ist, in dem der Handhebel (10) angeordnet ist, und dass, um das Ergreifen und Schwenken des Handhebels (10) zu ermöglichen, die Oberseite des Profils mit einer entsprechend dimensionierten, sich in Profillängsrichtung erstreckenden Öffnung (19) versehen ist.

10. Dachlastenträger nach einem der Ansprüche 6 bis 9, **dadurch gekennzeichnet, dass** die Reibfläche (35) an dem Reibelement (34) und die Gegenreibfläche (30) an dem ersten Formschlusselement (11A, 11 B) jeweils konisch gestaltet sind.

11. Dachlastenträger nach einem der Ansprüche 6 bis 10, **dadurch gekennzeichnet, dass** die Gegenreibfläche (30) mit mindestens einer sich in Richtung der Achse (A) erstreckenden Unterbrechung (31) für den axialen Durchtritt des zweiten Formschlusselements (12) versehen ist.

12. Dachlastenträger nach einem der Ansprüche 6 bis 11, **dadurch gekennzeichnet, dass** für einen Toleranzausgleich in Querträgerlängsrichtung das Reibelement (34) und das zweite Formschlusselement (12) längsbeweglich in dem Querträger (3) angeordnet sind.

13. Dachlastenträger nach einem der vorangehenden Ansprüche, **dadurch gekennzeichnet, dass** sich das zweite Formschlusselement (12) unter anderem aus einem auf der Achse (A) angeordneten Verbindungsschaft (15) und einem an dessen unterem Ende befestigten, zu dem ersten Formschlusselement (11A, 11B) korrespondierenden Querbolzen (16) zusammensetzt.

## Claims

1. Roof luggage holder for a vehicle roof, with first and second longitudinal members (1, 2) arranged fixedly in the longitudinal direction of the vehicle, a crossmember (3) which is connected at the first end (4) thereof to the first longitudinal member (1) via a pivot joint (6) and is pivotable about the pivot joint (6) from an inoperative position, in which the crossmember (3) extends parallel to the first longitudinal member (1), into a load position, in which the crossmember (3) forms a bridge between the two longitudinal members (1, 2), wherein a first form-fitting element (11A, 11B) is in each case arranged rigidly on another longitudinal section of the first longitudinal member (1) and on the second longitudinal member (2), at the same height in the longitudinal direction of the vehicle as the pivot joint (6), and in that a second form-fitting element (12) is arranged on the crossmember (3), in the region of the second end (5) thereof, said second form-fitting element being rotatable in the crossmember (3) about an axis (A) arranged parallel to the axis of the pivot joint (6), **characterized in that** the second form-fitting element (12) is arranged in a longitudinally movable manner with respect to the crossmember (3) in the direction of the axis (A), and, for the form-fitting connection to either of the two first form-fitting elements (11A, 11B), engages in said form-fitting element from below.

2. Roof luggage holder according to Claim 1, **characterized in that** the two first form-fitting elements (11A, 11B) are of identical design, but are arranged in an orientation rotated by 90° with respect to each other.

3. Roof luggage holder according to Claim 2, **characterized in that** the two first form-fitting elements (11A, 11B) are formed on identically designed components (20), and **in that** the components (20), rotated by 90° or 270° with respect to each other, are fastened to the respective longitudinal member (1, 2).

4. Roof luggage holder according to Claim 3, **characterized in that** the two components (20), for the non-rotatable connection thereof to the respective longitudinal member (1, 2), are provided with fastening regions (24) which are all located on a diagonal to the longitudinal axis of the longitudinal member (1, 2).

5. Roof luggage holder according to Claim 3 or 4, **characterized in that** the longitudinal members (1, 2) are hollow profiles, against the upper wall of which, which is provided with an opening (22), the respective component (20) is fastened from the inside, wherein the component (20) engages by a centring collar (21), which is formed thereon, in the opening (22).

6. Roof luggage holder according to one of the preceding claims, **characterized in that** a tensioning device for pressurizing a friction element (34) which is movable vertically in relation to the second form-fitting element (12) and the downwardly acting friction surface (35) of which bears against a mating friction surface (30) formed rigidly on the first form-fitting element (11A, 11B) is arranged on the axis (A).

7. Roof luggage holder according to Claim 6, **characterized in that** part of the tensioning device is a hand lever (10) with an eccentric (45) which is formed integrally thereon and operated in the direction towards the friction element (34).

8. Roof luggage holder according to Claim 7, **characterized in that** the hand lever (10) is connected pivotably to the second form-fitting element (12) via a joint bolt (14).

9. Roof luggage holder according to Claim 7 or 8, **characterized in that** the crossmember (3) is a profile in which the hand lever (10) is arranged, and **in that**, in order to permit the grasping and pivoting of the hand lever (10), the upper side of the profile is provided with a correspondingly dimensioned opening (19) extending in the longitudinal direction of the profile.

10. Roof luggage holder according to one of Claims 6 to 9, **characterized in that** the friction surface (35) on the friction element (34) and the mating friction surface (30) on the first form-fitting element (11A, 11B) are in each case of conical design.

11. Roof luggage holder according to one of Claims 6 to 10, **characterized in that** the mating friction surface (30) is provided with at least one interruption (31) extending in the direction of the axis (A) for the axial passage of the second form-fitting element (12).

12. Roof luggage holder according to one of Claims 6 to 11, **characterized in that**, in order to compensate for tolerances in the longitudinal direction of the crossmember, the friction element (34) and the second form-fitting element (12) are arranged in a longitudinally movable manner in the crossmember (3).

13. Roof luggage holder according to one of the preceding claims, **characterized in that** the second form-fitting element (12) is composed, inter alia, of a connecting shank (15) arranged on the axis (A) and a transverse bolt (16) which is fastened to the lower end of said connecting shank and corresponds to the first form-fitting element (11A, 11B).

## Revendications

1. Galerie de toit pour un toit de véhicule, avec un premier et un deuxième longerons (1, 2) fixés dans la direction longitudinale du véhicule, une traverse (3) reliée par sa première extrémité (4) au premier longeron (1) au moyen d'une articulation pivotante (6), laquelle peut pivoter autour de l'articulation pivotante (6), à partir d'une position de repos dans laquelle la traverse (3) s'étend parallèlement au premier longeron (1), dans une position de chargement dans laquelle la traverse (3) forme un pont entre les deux longerons (1, 2), dans laquelle, dans une autre partie longitudinale du premier longeron (1) ainsi que, à la même hauteur que l'articulation pivotante (6) dans la direction longitudinale du véhicule, un premier élément de liaison par emboîtement (11A, 11B) est respectivement disposé de façon rigide sur le deuxième longeron (2), et un deuxième élément de liaison par emboîtement (12) est disposé sur la traverse (3) dans la région de sa deuxième extrémité (5), lequel peut tourner dans la traverse (3) autour d'un axe (A) disposé parallèlement à l'axe de l'articulation pivotante (6), **caractérisée en ce que** le deuxième élément de liaison par emboîtement (12) est disposé de façon mobile longitudinalement dans la direction de l'axe (A) par rapport à la traverse (3) et, pour la liaison par emboîtement avec l'un quelconque des deux premiers éléments de liaison par emboîtement (11A, 11B), s'engage par le bas dans celui-ci.

2. Galerie de toit selon la revendication 1, **caractérisée en ce que** les deux premiers éléments de liaison par emboîtement (11A, 11B) sont configurés de manière identique, mais sont disposés dans une orientation tournée de 90° l'un par rapport à l'autre.

3. Galerie de toit selon la revendication 2, **caractérisée en ce que** les deux premiers éléments de liaison par emboîtement (11A, 11B) sont formés sur des composants configurés de manière identique (20), et **en ce que** les composants (20) sont fixés sur le longeron respectif (1, 2) en étant tournés de 90° ou de 270° l'un par rapport à l'autre.

4. Galerie de toit selon la revendication 3, **caractérisée en ce que** les deux composants (20) sont munis, pour leur liaison calée en rotation avec le longeron respectif (1, 2), de zones de fixation (24) qui se trouvent toutes sur une diagonale par rapport à l'axe longitudinal du longeron (1, 2).

5. Galerie de toit selon la revendication 3 ou 4 **caractérisée en ce que** les longerons (1, 2) sont des profilés creux, contre la paroi intérieure desquels, qui est munie d'une ouverture (22), le composant respectif (20) est fixé par l'intérieur, le composant (20) s'engageant dans l'ouverture (22) avec un rebord de centrage (21) formé sur celui-ci.

6. Galerie de toit selon l'une quelconque des revendications précédentes, **caractérisée en ce qu'**un dispositif de serrage est disposé sur l'axe (A) pour exercer une pression sur un élément de friction (34) mobile en hauteur par rapport au deuxième élément de liaison par emboîtement (12), dont la face de friction (35) agissant vers le bas s'applique sur une contre-face de friction (30) formée rigidement sur le premier élément de liaison par emboîtement (11A, 11B).

7. Galerie de toit selon la revendication 6, **caractérisée en ce qu'**un élément du dispositif de serrage est un levier manuel (10) avec un excentrique (45) formé d'une seule pièce sur celui-ci et opérant en direction de l'élément de friction (34).

8. Galerie de toit selon la revendication 7, **caractérisée en ce que** le levier manuel (10) est relié au deuxième élément de liaison par emboîtement (12) de façon pivotante au moyen d'un axe d'articulation (14).

9. Galerie de toit selon la revendication 7 ou 8, **caractérisée en ce que** la traverse (3) est un profilé, dans lequel le levier manuel (10) est disposé, et **en ce que**, pour permettre de saisir et de faire pivoter le levier manuel (10), le côté supérieur du profilé est doté d'une ouverture (19) s'étendant dans la direction longitudinale du profilé et dimensionnée de façon correspondante.

10. Galerie de toit selon l'une quelconque des revendications 6 à 9, **caractérisée en ce que** la face de friction (35) sur l'élément de friction (34) et la contre-face de friction (30) sur le premier élément de liaison par emboîtement (11A, 11B) sont respectivement de forme conique.

11. Galerie de toit selon l'une quelconque des revendications 6 à 10, **caractérisée en ce que** la contre-face de friction (30) est dotée d'au moins une interruption (31) s'étendant dans la direction de l'axe (A) pour le passage axial du deuxième élément de liaison par emboîtement (12).

12. Galerie de toit selon l'une quelconque des revendications 6 à 11, **caractérisée en ce que** l'élément de friction (34) et le deuxième élément de liaison par emboîtement (12) sont disposés de façon mobile longitudinalement dans la traverse (3) en vue d'une compensation des tolérances dans la direction longitudinale de la traverse.

13. Galerie de toit selon l'une quelconque des revendications précédentes, **caractérisée en ce que** le deuxième élément de liaison par emboîtement (12) se compose entre autres d'une tige de liaison (15) disposée sur l'axe (A) et d'un axe transversal (16) fixé à l'extrémité inférieure de celle-ci et correspondant au premier élément de liaison par emboîtement (11A, 11B).
